Europäisches Patentamt

(19) European Patent Office

Office européen des brevets

(11) Publication number: **0 140 227**
**B1**

(12) **EUROPEAN PATENT SPECIFICATION**

(45) Date of publication of patent specification: **08.04.87**

(21) Application number: **84112089.2**

(22) Date of filing: **09.10.84**

(51) Int. Cl.⁴: **D 21 H 1/28** // C08F218/04, C08F8/42

(54) **Improved high strength pigment binders for paper coating compositions.**

(30) Priority: **19.10.83 US 543565**

(43) Date of publication of application:
**08.05.85 Bulletin 85/19**

(45) Publication of the grant of the patent:
**08.04.87 Bulletin 87/15**

(84) Designated Contracting States:
**DE FR GB IT**

(56) References cited:
**EP-A-0 048 461**
**EP-A-0 076 490**
**US-A-3 108 920**
**US-A-3 408 420**
**US-A-3 814 716**
**US-A-4 395 499**

(73) Proprietor: **National Starch and Chemical Corporation**
**Box 6500**
**Bridgewater, N.J. 08807 (US)**

(72) Inventor: **Rosenski, Josephine**
**148 Jackson Avenue**
**North Plainfield New Jersey 07060 (US)**
Inventor: **Fernandez, Joseph**
**3905 Fox Run Drive**
**Plainsboro New Jersey 08536 (US)**
Inventor: **Ulyatt, Jeffrey**
**Quarter Piece Everdon**
**Daventry Northamptonshire (GB)**

(74) Representative: **Hagemann, Heinrich, Dr. et al**
**Patentanwälte GEYER, HAGEMANN & KEHL**
**Postfach 860329**
**D-8000 München 86 (DE)**

Courier Press, Leamington Spa, England.

# 0 140 227

**Description**

The present invention is directed to high strength pigment binders for paper coating having increased water retention and stability. The coating compositions comprise an aqueous synthetic polymer latex and pigment and may contain other additives used in the art of pigmented paper coating. The latex comprises a vinyl ester, an organofunctional silane, carboxyl and/or amide functionality and optionally ethylene and/or other polymerizable comonomers.

In the preparation of a coated paper web there is used a pigment, such as clay or the like, which is then compounded with a latex binder or adhesive material to produce a composition known in the art as a coating "color" for use in coating a cellulose web, e.g. a paper or paperboard web. Substantial quantities of the binder are used, and, accordingly, the composition and characteristics of the latex binder are of great importance in determining the qualities of the finished coated web.

It has been recognized in the paper industry that increased dry strength properties may be provided to these latex binders by the inclusion therein of carboxyl or amide functionalities. There has however been difficulty encountered in providing carboxylic functionality in excess of about 2% by weight to vinyl ester containing latex polymer compositions due to excessive alkaline swellability of the resultant latex particles. This swellability, in turn, produces unacceptable latex thickening at these pH values and consequent problems in the transport of such materials in conventional latex handling equipment where viscosities less than about 1000 mPa · s, are generally employed.

Copending patent applications, Serial No. 417,291 issued July 26, 1983 as US—A—4,395,499 and Ser. No. 417,020 filed Sept. 13, 1982, now abandoned and refiled Feb. 14, 1984 as Serial No. 580,055, disclose that substantially higher levels of carboxylation, with consequent improvement in coating strength may be achieved with a reduction in alkaline swellability by incorporation in the interpolymer of one of a specific class of polyethylenically unsaturated comonomers. Further improvements with respect to coating strength may be achieved by the use in the coating composition of specific silane comonomers either instead of or in partial addition to the specific polyethylenically unsaturated comonomers disclosed therein. The use of these silanes also substantially improves the dry strength properties of paper coatings prepared from latex binders containing amide functionalities.

The pigmented paper coating composition herein comprises an aqueous synthetic polymer latex binder, pigment, and sufficient alkali to achieve a pH of 6 to 10, the latex comprising dispersed therein an interpolymer having a $T_g$ value of +50 to −40°C which consists essentially of:

(a) a vinyl ester of an alkanoic acid optionally interpolymerized with:

i) from 0 to 30% by weight of ethylene; and/or

ii) from 0 to 50% by weight of at least one monomer selected from the group consisting of dialkyl $(C_1—C_2)$ maleates, fumarates or itaconates; vinyl halides; vinylidene halides; alkyl $(C_2—C_4)$ vinyl ethers; and hydroxy alkyl acrylates or methacrylates;

(b) at least one of:

i) from 0.5 to 15 parts per 100 parts (a) of an ethylenically unsaturated mono- or dicarboxylic acid or half ester of said dicarboxylic acid; or

ii) from 0.5 to 5 parts per 100 parts (a) of an amide, N-alkylol amide or N-alkoxy-alkyl amide of an α,β-olefinically unsaturated carboxylic acid; and

(c) from 0 to 1 parts per 100 parts (a) of a polyethylenically unsaturated comonomer selected from the group consisting of triallyl cyanurate, triallyl isocyanurate, diallyl maleate, diallyl fumarate, divinyl benzene, and diallyl phthalate, which is characterized in, that the interpolymer contains 0.01 to 3 parts per 100 parts (a) of an organofunctional silane.

The vinyl ester monomers which may be utilized herein include the vinyl esters of alkanoic acids having from 1 to 13 carbon atoms. Typical examples include: vinyl acetate, vinyl propionate, vinyl butyrate, vinyl isobutyrate, vinyl valerate, vinyl 2-ethyl hexanoate, vinyl isooctanoate, vinyl decanoate, vinyl pivalate and vinyl versatate. Of the foregoing, vinyl acetate is the preferred monomer because of its ready availability and low cost.

The vinyl ester may be used alone as the base monomer for the interpolymer; however, there is generally added at least one other monomer capable of copolymerizing with the vinyl ester and achieving a Tg within the required range. One of the useful monomers for such purposes is ethylene which, if used herein, is added at levels of 1 to 30%, preferably 5 to 25%, by weight of the interpolymer.

Other specific copolymerizable monomers may be used to prepare the desired interpolymer. These monomers include dialkyl $(C_1—C_6)$ maleates, fumarates or itaconates; vinyl halides and vinylidene halides such as vinyl chloride, vinyl bromide and vinylidene chloride; alkyl $(C_2—C_{10})$ vinyl ethers such as methyl vinyl ether and isobutyl vinyl ether; and hydroxyl alkyl acrylates or methacrylates. If this class of monomers are employed, they are generally used at levels of 5 to 50% by weight of the interpolymer solids.

It will be recognized by those skilled in the art that specific monomers of the above classes can be combined in the vinyl ester interpolymer at levels conventionally used. In particular, suitable interpolymers may be prepared from vinyl acetate, ethylene and vinyl chloride.

The organo-functional silanes useful are those which will either participate directly in the reaction by free-radical polymerization or will enter into a condensation reaction with other groups already present in the interpolymer backbone. Typical of silanes of the first group are, for example, the vinyl or mercaptosubstituted silanes which will copolymerize with the vinyl acetate or vinyl acetate-alkyl acrylate interpolymer. Representative commercially available silanes of the first class include vinyltrichlorosilane, vinyltriethoxysilane, vinyltrimethoxysilane, vinyltris(2-methoxyethoxy)silane, gamma-methacryloxypropyltrimethoxysilane, gamma-methacryloxy-propyltris-(2-methoxyethoxy) silane, vinyltriacetoxysilane and gamma-mercaptopropyltrimethoxysilane. Typical of the second group of silanes are the glycidyl containing silanes which can react with other functional groups already present on the polymer, for example, the carboxyl groups. Representative of this type of silane monomer are gamma-glycidoxy-propoltrimethoxysilane, beta-(3,4-epoxycyclohexyl)-ethyltrimethoxysilane.

It is also required that the latex binders herein contain either carboxyl or amide functionality.

Generally, any ethylenically unsaturated mono- or dicarboxylic acid may be used to provide the carboxyl functionality. Examples of suitable acids include the monocarboxylic ethylenically unsaturated acids such as acrylic, vinyl acetic, crotonic, methacrylic, tiglic, etc.; the dicarboxylic ethylenically unsaturated acids such as maleic, fumaric, itaconic, citraconic, hydromuconic, allylmalonic, etc. as well as the half esters of these dicarboxylic acids such as mono(2-ethylhexyl) maleate, monoethyl maleate, monobutyl maleate, etc.

Useful amides are the amides of α,β-olefinically unsaturated carboxylic acids such as acrylamide, methacrylamide, and diacetone acrylamide; N-alkylol amides of α,β-olefinically unsaturated carboxylic acids such as N-methylol acrylamide and N-methylol methacrylamide; N-alkoxyalkyl amides of α,β-olefinically unsaturated carboxylic acids such as N-methoxymethyl acrylamide and N-butoxymethyl methacrylamide.

If the amides are employed, they are generally present at levels of 0.5 to 5 parts per 100 parts of the vinyl ester interpolymer while the carboxyl containing monomers may be used at levels of 0.5 to 15 parts. It will also be recognized that the interpolymer may be prepared with both amide and carboxyl containing monomers with the maximum level thereof dependent upon the polymerization procedure used.

The resultant paper coating latex compositions are characterized by increased water retention and, in some cases, reduced alkali response in the latex state with improved properties of dry strength imparted to the final paper sheets coated therewith.

The interpolymer latices used in the coating compositions herein may be prepared as follows. The vinyl ester, optional comonomer, organofunctional silane, carboxylic acid or amide, and polyethylenically unsaturated monomer, if used, are interpolymerized in an aqueous medium in the presence of a catalyst and an emulsion stabilizing amount of an anionic or a nonionic surfactant or mixtures thereof. The aqueous system is maintained by a suitable buffering agent, if necessary, at a pH of 2 to 6. The polymerization is performed at conventional temperatures of from 21—107°C (70°—225°F), preferably from 49—79°C (120°—175°F), for sufficient time to achieve a low monomer content, e.g. from 0.5—10 hours, preferably from 2—6 hours, to produce a latex having less than 1.5%, preferably less than 0.5%, free monomer by weight. Conventional batch, semi-continuous or continuous polymerization procedures may be employed and are taught, for example in the US—A—3,706,697.

The polymerization is typically initiated by a free radial initiator such as water soluble peracid or salt thereof, e.g. hydrogen peroxide, sodium peroxide, lithium peroxide, peracetic acid, persulfuric acid or the ammonium and alkali metal salts thereof, e.g. ammonium persulfate, sodium peracetate, lithium persulfate, potassium persulfate, and sodium persulfate. Alternatively, organic peroxides such as benzyl peroxide, t-butyl hydroperoxide, may also be employed. A suitable concentration of the initiator is from 0.05—5.0%, preferably from 0.1—3%, by weight.

The free radical initiator can be used alone and thermally decomposed to release the free radical initiating species or can be used in combination with a suitable reducing agent in a redox couple. The reducing agent is typically an oxidizable sulfur compound such as an alkali metal metabisulfite and pyrosulfite, e.g. sodium metabisulfite, sodium formaldehyde sulfoxalate, potassium metabisulfite, and sodium pyrosulfite. The amount of reducing agent which can be employed throughout the copolymerization generally varies from about 0.1 to 3 weight percent of the amount of polymer.

The emulsifying agent can be of any of the nonionic or anionic oil-in-water surface active agents or mixtures thereof generally employed in emulsion polymerization procedures. When combinations of emulsifying agents are used, it is advantageous to use a relatively hydrophobic emulsifying agent in combination with a relatively hydrophilic agent. The amount of emulsifying agent is generally from about 1—10%, preferably from about 2—8%, by weight of the monomers used in the polymerization.

The emulsifier used in the polymerization can also be added, in its entirety, to the initial charge to the polymerization zone or a portion of the emulsifier, e.g. from 90 to 25 percent thereof, can be added continuously or intermittently during polymerization.

The preferred interpolymerization procedure is a modified batch process wherein the major amounts of some or all the comonomers and emulsifier are charged to the reaction vessel after polymerization has been initiated. In this manner, control over the copolymerization of monomers having widely varied degrees of reactivity can be achieved. It is preferred to add a small portion of the vinyl ester initially and then the remainder of vinyl ester and other comonomers intermittently or continuously over the polymerization period which can be from 0.5—10 hours, preferably from 2—6 hours.

In the case of vinyl ester interpolymers containing ethylene, the polymerization procedure is similar to that discussed above except that it is carried out under pressure of $10—132 \times 10^5$ Pa (10—130 atmospheres) using polymerization procedures taught, for example, in US—A—3,708,388; 3,404,112; 3,714,099; and 4,164,488. In these cases, the ethylene content of the interpolymer depends on the ethylene content of the aqueous polymerization medium. Factors which control the ethylene content of the polymerization medium include the partial pressure of ethylene in the vapor phase over the medium, the temperature of polymerization, and the degree of mixing between the vapor phase and the liquid medium. Generally, the polymerization is performed at temperatures from 49—79°C (120—175°F) and, at these temperatures, ethylene partial pressures from $345—10,342 \times 10^3$ Pa (50—1,500 psig), preferably from $1724—6895 \times 10^3$ Pa (250—1,000 psig.) are sufficient to incorporate from 1 to 30%, preferably from 5 to 25%, by weight of ethylene in the polymer. The reaction medium is preferably agitated with a stirrer, however, other agitation can be used as sparging the liquid with recirculated ethylene from the vapor phase. In the preferred procedure, the ethylene partial pressure is maintained constant throughout the polymerization period so that this monomer is continuously supplied at a constant rate.

In either case, the latices are produced and used at relatively high solids contents, e.g. between 35 and 70%, although they may be diluted with water if desired. The preferred latices will contain from 40 to 60% and, most preferred, from 50 to 60% by weight of solids.

The particle size of the latex can be regulated by the quantity of non-ionic or anionic emulsifying agent or agents employed. To obtain smaller particles sizes, greater amounts of emulsifying agents are used. As a general rule, the greater the amount of the emulsifying agent employed, the smaller the average particle size.

The actual paper coating composition comprises the interpolymer latex together with a pigment, such as clay and the usual paper coating additives which may include other co-binders, such as polyvinyl alcohol, protein (e.g. casein or soy protein), or starch, as is well known to those skilled in the art.

The pigment used in the paper coating composition may be any of those conventionally employed. Generally, at least a portion of the pigment comprises clay and for this portion any of the clays customarily used for paper coating, including the hydrous aluminum silicates of kaolin group clays, hydrated silica clays, and the specific types of clays recommended in Chapters 10—16 of "Kaolin Clays and their Industrial Uses", by J. M. Huber Corp. (1949), New York, NY. In addition to clay itself, there may be utilized other paper pigments such as, for example, calcium carbonate, titanium dioxide, blanc fixe, lithopone, zinc sulfide, or other coating pigments including plastics, for example polystyrene in various ratios, e.g., up to 50%, preferably up to 35%, by weight of the clay. Additionally, the composition may also contain other additives such as zinc oxide and/or a small amount, of a dispersing or stabilizing agent such as tetrasodium pyrophosphate. In general, the paper coating composition comprises 100 parts pigment containing 65—100 parts clay and 0—35 parts secondary pigment; 0.01—0.5 parts dispersing or stabilizing agent; 3—30 parts interpolymer latex (solids basis); 0—25 parts cobinder; 0—0.2 parts defoamer and sufficient water to provide the desired level of solids. The modification and formulation of the coating color using these materials will be within the knowledge of those skilled in the art.

The coating compositions produced herein may be applied to fibrous paper webs using any of the conventional coating devices including, but not limited to, those referred to as trailing blade coaters, air knife coaters, roll coaters and the like.

In the examples which follow, all temperatures are in degrees Celsuis, and all parts of the silane, carboxylic acid or amide, and optional polyethylenically unsaturated comonomers are based on parts per 100 parts by weight of the combined vinyl ester, ethylene, and/or other comonomers. In testing the latices and coating colors produced in the examples, the test procedures used were as follows:

Brookfield viscosity values were obtained using Spindle #2 at 20 rpm in and/or 100 rpm in as indicated.

Dry strength values on paperboard were determined using an IGT Dynamic Pick Tester, an IPI tack rated ink as indicated, a "B" spring setting and a 35 kg load.

Example I

A series of latexes were prepared using ethylene vinyl acetate copolymers containing 15% ethylene. The latices were formulated as pigment binders in coating colors using 100 parts clay, 16 parts latex (dry weight), 0.3 parts carboxymethyl cellulose and 1.28 parts Berset®. Tests of the resultant colors are shown in Table I-A and I-B where Table I-A represents latices containing amide functionalities while those of Table I-B contain carboxyl functionalities.

# 0 140 227

### TABLE I-A

| Silane | N-methylol acrylamide | IGT (#5 ink) |
|--------|------------------------|--------------|
| — | 1.0 | 430 |
| 0.5 | 1.0 | 610 |
| 1.0 | 1.0 | 550 |

### Table I-B

| Silane | Monoethyl maleate | IGT (#5 ink) |
|--------|-------------------|--------------|
| — | 1.5 | 330 |
| 0.5 | 3.0 | 460 |

## Claims

1. A pigmented paper coating composition comprising an aqueous synthetic polymer latex binder, pigment, and sufficient alkali to achieve a pH of 6 to 10, the latex comprising dispersed therein an interpolymer having a Tg value of +50 to −40°C, which consists essentially of:

    (a) a vinyl ester of an alkanoic acid optionally interpolymerized with:

i) from 0 to 30% by weight of ethylene; and/or
ii) from 0 to 50% by weight of at least one monomer selected from the group consisting of dialkyl $(C_1—C_2)$ maleates, fumarates or itaconates; vinyl halides; vinylidene halides; alkyl $(C_2—C_4)$ vinyl ethers; and hydroxy alkyl acrylates or methacrylates;

    (b) at least one of:

i) from 0.5 to 15 parts per 100 parts (a) of an ethylenically unsaturated mono- or dicarboxylic acid or half ester of said dicarboxylic acid; or
ii) from 0.5 to 5 parts per 100 parts (a) of an amide, N-alkylol amide or N-alkoxy-alkyl amide of an $\alpha,\beta$-olefinically unsaturated carboxylic acid; and

    (c) from 0 to 1 parts per 100 parts (a) of a polyethylenically unsaturated comonomer selected from the group consisting of triallyl cyanurate, triallyl isocyanurate, diallyl maleate, diallyl fumarate, divinyl benzene, and diallyl phthalate, characterized in that the interpolymer contains 0.01 to 3 parts per 100 parts (a) of an organofunctional silane.

2. The composition of Claim 1 wherein the vinyl ester is selected from the group consisting of vinyl formate, vinyl acetate, vinyl propionate, vinyl butyrate, vinyl isobutyrate, vinyl valerate, vinyl 2-ethylhexanoate, vinyl isooctanoate, vinyl nonate, vinyl decanoate, vinyl pivalate and vinyl versatate.

3. The composition of Claim 1 wherein the organofunctional silane is selected from the group consisting of vinyltrichlorosilane, vinyltriethoxysilane, vinyltrimethoxysilane, vinyl-tris(2-methoxyethoxy)silane, gamma-methacryloxypropyltrimethoxysilane, gamma-methacryloxypropyl-tris-(2-methoxyethoxy)silane, vinyltriacetoxysilane, gamma-mercaptopropyltrimethoxysilane, gamma-glycidoxypropyltrimethoxysilane, and beta-3,4-epoxycyclohexyl)-ethyltrimethoxysilane.

4. The composition of Claim 1, wherein the vinyl ester is vinyl acetate; and the organofunctional silane is gamma-methacryloxypropyltrimethoxysilane.

5. The composition of Claim 1 wherein the carboxylic acid component is selected from the group consisting of acrylic acid, vinyl acetic acid, crotonic acid, methacrylic acid, tiglic acid, maleic acid, fumaric acid, itaconic acid, maleic acid, citraconic acid, hydromuconic acid, and allylmalonic acid, mono(2-ethylhexyl) maleate, monoethyl maleate and monobutyl maleate.

6. The composition of Claim 1 wherein the amide component is selected from the group consisting of acrylamide, methacrylamide, diacetone acrylamide, N-methylol acrylamide, N-methylol methacrylamide, N-methoxymethyl acrylamide and N-butoxymethyl methacrylamide.

7. The composition of Claim 1 wherein the carboxylic acid component is monoethyl maleate or wherein the amide component is N-methylol acrylamide.

8. The composition of Claim 1 wherein the coating comprises 100 parts of the pigment, 0.01—0.5 parts dispersing agent, 3—30 parts (solids) latex, 0—25 parts co-binder, 0—0.2 parts defoamer and sufficient water to obtain a solids level of 35 to 70 weight percent.

9. A fibrous web coated with the pigmented paper coating composition of Claim 1.

5

0 140 227

10. A method for coating a fibrous web which comprises applying to the web the aqueous pigmented paper coating composition of Claim 1.

**Patentansprüche**

1. Pigmentierte Papierbeschichtungszusammensetzung mit einem Gehalt an einem wässrigen synthetischen polymeren Latexbindemittel, einem Pigment und ausreichend Alkali, um einen pH von 6 bis 10 zu erhalten, wobei die Latex darin dispergiert ein Mischpolymer eines Tg-Wertes von +50 bis −40°C enthält, das im wesentlichen besteht aus:

(a) einem Vinylester einer Alkansäure, gegebenenfalls mischpolymerisiert mit

(i) 0 bis 30 Gew.-% Ethylen und/oder
(ii) 0 bis 50 Gew.-% mindestens eines Monomers, das aus der aus Dialkyl-($C_1$—$C_2$)-maleaten, -fumaraten oder -itaconaten, Vinylhalogeniden, Vinylidenhalogeniden, Alkyl-($C_2$—$C_4$)-vinylethern und Hydroxy-alkylacrylaten oder -methacrylaten bestehenden Gruppe ausgewählt ist,

(b) mindestens

(i) 0.5 bis 15 Teilen pro 100 Teile (a) einer ethylenisch ungesättigten Mono- oder Dicarbonsäure oder eines Halbesters dieser Dicarbonsäure oder
(ii) 0.5 bis 5 Teilen pro 100 Teile (a) eines Amids, N-Alkylolamids oder N-Alkoxyalkylamids einer $\alpha,\beta$-olefinisch ungesättigten Carbonsäure und

(c) 0 bis 1 Teil pro 100 Teile (a) eines mehrfach ethylenisch ungesättigten Comonomers, das aus der aus Triallylcyanurat, Triallylisocyanurat, Diallylmaleat, Diallylfumarat, Divinylbenzol und Diallylphthalat bestehenden Gruppe ausgewählt ist, dadurch gekennzeichnet, daß das Mischpolymer 0,01 bis 3 Teile organofunktionelles Silan pro 100 Teile (a) enthält.

2. Zusammensetzung nach Anspruch 1, dadurch gekennzeichnet, daß der Vinylester aus der aus Vinylformiat, Vinylacetat, Vinylpropionat, Vinylbutyrat, Vinylisobutyrat, Vinylvalerianat, Vinyl-2-ethyl-hexanoat, Vinylisooctanoat, Vinylnonat, Vinyldecanoat, Vinylpivalat und Vinylversatat bestehenden Gruppe ausgewählt ist.

3. Zusammensetzung nach Anspruch 1, dadurch gekennzeichnet, daß das organofunktionelle Silan aus der aus Vinyltrichlorsilan, Vinyltriethoxysilan, Vinyltrimethoxysilan, Vinyl-tris-(2-methoxyethoxy)-silan, Gamma-Methacryloxypropyltrimethoxysilan, Gamma-Methacryloxypropyl-tris-(2-methoxyethoxy)-silan, Vinyltriacetoxysilan, Gamma-Mercaptopropyltrimethoxysilan, Gamma-Glycidoxypropyltrimethoxysilan und Beta-(3,4-Epoxycyclohexyl)-ethyltrimethoxysilan bestehenden Gruppe ausgewählt ist.

4. Zusammensetzung nach Anspruch 1, dadurch gekennzeichnet, daß der Vinylester Vinylacetat und das organofunktionelle Silan Gamma-Methacryloxypropyltrimethoxysilan ist.

5. Zusammensetzung nach Anspruch 1, dadurch gekennzeichnet, daß der Carbonsäurebestandteil aus der aus Acrylsäure, Vinylessigsäure, Crotonsäure, Methacrylsäure, Tiglinsäure, Maleinsäure, Fumarsäure, Itaconsäure, Citraconsäure, Hydromuconsäure, Allylmalonsäure, Mono(2-ethylhexyl)-maleat, Monoethylmaleat und Monobutylmaleat bestehenden Gruppe ausgewählt ist.

6. Zusammensetzung nach Anspruch 1, dadurch gekennzeichnet, daß der Amidbestandteil aus der aus Acrylamid, Methacrylamid, Diacetonacrylamid, N-Methylolacrylamid, N-Methylolmethacrylamid, N-Methoxymethylacrylamid und N-Butoxymethylmethacrylamid bestehenden Gruppe ausgewählt ist.

7. Zusammensetzung nach Anspruch 1, dadurch gekennzeichnet, daß der Carbonsäurebestandteil Monoethylmaleat oder der Amidbestandteil N-Methylolacrylamid ist.

8. Zusammensetzung nach Anspruch 1, dadurch gekennzeichnet, daß die Beschichtung 100 Teile Pigment, 0,01 bis 0,5 Teile Dispergiermittel, 3 bis 30 Teile (Feststoff) Latex, 0 bis 25 Teile zusätzliches Bindemittel, 0 bis 0,2 Teile Entschäumungsmittel und ausreichend Wasser enthält, um einen Feststoffanteil von 35 bis 70 Gew.% zu erhalten.

9. Faserige Papierbahn, beschichtet mit der pigmentierten Papierbeschichtungszusammensetzung nach Anspruch 1.

10. Verfahren zum Beschichten einer faserigen Papierbahn, welches das Aufbringen der wässrigen pigmentierten Papierbeschichtungszusammensetzung nach Anspruch 1 auf die Papierbahn umfaßt.

**Revendications**

1. Composition d'enduction pigmentée de papier contenant: un liant à base de latex polymère synthétique aqueux, un pigment, et suffisamment d'alcali pour obtenir un pH de 6 à 10, le latex contenant en dispersion un copolymère ayant une valeur de Tg comprise entre +50 et −40°C, la composition étant constituée essentiellement par:

(a) un ester vinylique d'un acide alcanoïque optionnellement copolymérisé avec:

(1) de 0 à 30% en poids d'éthylène; et/ou

6

**0 140 227**

(2) de 0 à 50% en poids d'au moins un monomère choisi dans le groupe comprenant des maléates, fumarates ou itaconates dialcoyliques en (C1—C2); des halogénures de vinyle; des halogénures de vinylidène; des éthers vinyliques d'alcoyle en (C2—C4); et des acrylates ou méthacrylates d'hydroxy-alcoyles.

(b) au moins l'un de:

(1) 0,5 à 15 parties pour 100 parties de (a), d'un acide mono- ou dicarboxylique insaturé à liaisons éthyléniques ou un semi-ester de cet acide dicarboxylique; ou
(2) 0,5 à 5 parties pour 100 parties de (a) d'une amide, d'une N-alcoylol-amide ou d'une N-alcoxy-alcoylamide d'un acide carboxlique insaturé à liaisons oléfiniques en α et β; et

(c) 0 à 1 partie pour 100 parties de (a) d'un comonomère insature à plusieurs liaisons éthyléniques choisi dans le groupe comprenant le cyanurate de triallyle, l'isocyanurate de triallyle, le maleate de diallyle, le fumarate de diallyle, le divinylbenzene et le phtalate de diallyle, la composition étant caractérisée par le fait que le copolymère contient 0,01 à 3 parties pour 100 parties de (a) d'un silane organofonctionnel.

2. Composition selon la revendication 1, dans laquelle l'ester vinylique est chiosi dans le groupe comprenant: le formate de vinyle, l'acetate de vinyle, le propionate de vinyle, le butyrate de vinyle, l'isobutyrate de vinyle, le valérate de vinyle, le 2-éthyl-hexanoate de vinyle, l'iso-octanoate de vinyle, le décanoate de vinyle, le pivalate de vinyle et le versatate de vinyle.

3. Composition selon la revendication 1, dans laquelle le silane organofonctionnel est choisi dans le groupe consistant en: vinyltrichlorosilane, vinyltriéthoxysilane, vinyltriméthoxysilane, vinyltris(2-méthoxy-éthoxysilane, gamma-méthacryloxypropyltrimethoxysilane, gamma-méthacryloxy-propyltris-(2-méthoxy-éthoxy)silane, vinyltriacétoxysilane et gamma-mercaptopropyltriméthoxysilane, gamma-glycidoxy-propyl-triméthoxysilane, et bêta-(3,4-époxycyclohexyl)-éthyl-triméthoxysilane.

4. Composition selon la revendication 1, dans laquelle l'ester vinylique est l'acétate de vinyle; et le silane organofonctionnel est le gamma-méthacryloxypropyl-triméthoxysilane.

5. Composition selon la revendication 1, dans laquelle le composant acide carboxylique est choisi dans le groupe consistant en: acide acrylique, acide vinylacétique, acide crotonique, acide méthacrylique, acide tiglique, acide maléique, acide fumarique, acide itaconique, acide citraconique, acide hydromuconique et acide allylmalonique, mono(2-éthylhexyle)maleate, monoéthylmaléate et monobutylmaléate.

6. Composition selon la revendication 1, dans laquelle le composant amide est choisi dans la groupe consistant en: acrylamide, méthacrylamide, diacetone-acrylamide, N-méthylolacrylamide, N-méthylol-méthacrylamide, N-méthoxyméthylacrylamide, et N-butoxyméthylméthacrylamide.

7. Composition selon la revendication 1, dans laquelle le composant acide carboxylique est le monoéthylmaléate ou dans laquelle le composant amide est la N-méthylolacrylamide.

8. Composition selon la revendication 1, dans laquelle l'enduit comprend 100 parties du pigment; 0,01 à 0,5 partie d'agent de dispersion; 3 à 30 parties (solides) de latex; 0 à 25 parties de co-liant; 0 à 0,2 partie de démoussant et suffisamment d'eau pour obtenir un niveau de solides de 30 à 70% en poids.

9. Bande fibreuse enduite de la composition d'enduction pigmentée de papier selon la revendication 1.

10. Procédé pour enduire une bande fibreuse, qui consiste à appliquer sur la bande la composition d'enduction de papier pigmentée aqueuse de la revendication 1.

7